# EUROPÄISCHE PATENTSCHRIFT

(11) **EP 4 466 822 B1**
(45) Veröffentlichungstag und Bekanntmachung des Hinweises auf die Patenterteilung: **03.09.2025**
(21) Anmeldenummer: 23710251.2
(22) Anmeldetag: 02.03.2023
(51) Int. Cl.: H04L 9/00, H04L 9/32, H04L 9/08

(54) **NACHVOLLZIEHBARES ANFORDERN EINES ZERTIFIKATS DURCH EINE REGISTRIERUNGSSTELLE**
TRACEABLE REQUEST OF A CERTIFICATE REQUEST BY A REGISTRATION AUTHORITY
DEMANDE TRAÇABLE D'UN CERTIFICAT PAR UN POINT D'ENREGISTREMENT

(30) Priorität: 08.03.2022 EP 22160717
(43) Veröffentlichungstag der Anmeldung: 27.11.2024
(73) Patentinhaber: Siemens Aktiengesellschaft, 80333 München (DE)
(72) Erfinder: RAUCH, Martin, 86415 Mering (DE)
(74) Vertreter: Siemens Patent Attorneys
(86) Internationale Anmeldenummer: PCT/EP2023/055339
(87) Internationale Veröffentlichungsnummer: WO 2023/169926

(56) Entgegenhaltungen:
- EP-A1- 2 770 467
- EP-A1- 3 726 798
- WO-A1-2018/167253
- WO-A1-2019/034509
- US-A1- 2016 087 804

## Beschreibung

Die Erfindung betrifft Verfahren zum nachvollziehbaren Anfordern von Zertifikaten durch mindestens eine Registrierungsstelle bei einer Zertifizierungsstelle in einer Public-Key-Infrastruktur.

Eine Public-Key-Infrastruktur (PKI) bezeichnet man in
der Kryptologie ein System, das digitale Zertifikate ausstellen, verteilen und prüfen kann. Ein digitales Zertifikat, im Weiteren kurz als Zertifikat bezeichnet, ist eine digital signierte elektronische Datenstruktur, die zum Nachweis der Echtheit von Objekten verwenden wird. Üblicherweise umfasst die PKI eine Zertifizierungsstelle, die das Zertifikat bereitstellt und die Signatur von Zertifikatsanträgen übernimmt, sowie eine Registrierungsstelle, bei der Geräte Zertifikate beantragen können. Die Registrierungsstelle prüft die Richtigkeit der Daten im Zertifikatsantrag und genehmigt diesen gegebenenfalls. Die Informationen aus dem genehmigten Antrag können dann durch die Zertifizierungsstelle signiert werden, wobei das gewünschte Zertifikat entsteht. Üblicherweise sind die einzelnen Komponenten durch ein Datenkommunikationsnetz miteinander verbunden und tauschen Anfragen nach Zertifikaten, Antworten dazu und dergleichen mittels Kommunikationsnachrichten untereinander aus.

In EP 2 770 467 A1 wird ein Verfahren zur Erweiterung der Attribute in einer Credentialanforderung, die von einem Client an einen Credentialaussteller zur Ausstellung eines Credentials geschickt wird, beschrieben. Bei der Credentialanforderung werden in einer zwischen Client und Credentialaussteller angeordneten Vermittlereinheit zusätzliche Attribute des anfragenden Clients ermittelt und bestätigt. Das Credetial wird vom Credentialaussteller abhängig von der Credentialanforderung und dem bestätigten Attribut ausgestellt.

Die Druckschriften US 2016/087804 A1, EP 3 726 798 A1, WO 2019/034509 A1, WO 2018/167253 A1 offenbaren weitere Verfahren zum sicheren Ausstellen bzw. Ersetzen von Zertifikaten und zum Protokollieren von Zustandsdaten in einer Blockchain.

Bei der Ausstellung von Zertifikaten in der Public-Key-Infrastruktur ist es wichtig, dass Anforderungen, die an die Zertifizierungsstelle geschickt werden von einer vertrauenswürdigen Komponente, beispielsweise einem Gerät oder einer Registrierungsstelle gesendet werden. Im Fall einer Registrierungsstelle muss sich diese üblicherweise gegenüber der Zertifizierungsstelle authentisieren, um eine Anforderung einzureichen. Dazu werden meist kryptographische Verfahren verwendet und die Registrierungsstelle besitzt dazu die notwendigen Berechtigungsnachweise, beispielsweises einen kryptographischen Schlüssel.

Kann ein Angreifer in den Besitz der Berechtigungsnachweise der Registrierungsstelle gelangen, kann er im Namen dieser Registrierungsstelle Zertifikate von einer Zertifizierungsstelle anfordern und diese beispielsweise auf gefälschten Geräten installieren und diese als vermeintlich echte Geräte in Umlauf bringen.

Wird ein Angriff auf eine Registrierungsstelle erkannt, ist es wichtig zu ermitteln welche Zertifikate von der angegriffenen Registrierungsstelle beantragt, d.h. angefordert und somit potentiell vom Angreifer erbeutet wurden. Dies kann schwierig sein, beispielsweise wenn eine Zertifikatanforderung, genauer eine Anforderungsnachricht über mehrere Hops zur Zertifizierungsstelle übermittelt wurde und die Absenderinformation von mehreren Komponenten ausgewertet und verändert werden, und somit Informationen zur Ursprungs-Registrierungsstelle auf dem Weg verloren gehen.

Häufig werden Ereignisse, wie ein Empfang und Ausgang von Nachrichten protokolliert. Die Protokollinformation wird entweder lokal, beispielsweise als Event Log, abgespeichert oder an einen zentralen Protokollserver, gesendet und dort abgespeichert werden. Bei der lokalen Speicherung von Protokolldaten auf der Registrierungsstelle kann ein Angreifer auch Zugriff auf diese Protokollinformation erlangen und dieses manipulieren. Es besteht zudem die Gefahr, dass die Protokollierung durch den Angreifer ganz verhindert wird, z.B. durch Manipulation der Registrierungsstelle-Software oder die Verwendung eigener Software.

Es ist somit eine Aufgabe der vorliegenden Erfindung, ein Verfahren zu schaffen, bei dem eine Zertifikatanforderung manipulationssicher auf die anfordernde Registrierungsstelle zurückverfolgt werden kann.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zum nachvollziehbaren Anfordern eines Zertifikats durch mindestens eine Registrierungsstelle bei einer Zertifizierungsstelle in einer Public-Key-Infrastruktur, umfassend die Schritte:
a) Empfangen einer Zertifikatanforderung zur Ausstellung eines Zertifikats für einen Nutzer in der Registrierungsstelle,
b) Senden einer Protokollierungsnachricht, die Information zur Zertifikatsanforderung enthält, von der Registrierungsstelle an eine Protokollierungsvorrichtung,
   in der Registrierungsstelle,
c) Empfangen einer Bestätigungskennung, wenn die Information in der Protokollierungsvorrichtung erfolgreiche gespeichert wurde,
d) Weiterleiten einer erweiterten Zertifikatanforderung, die um die Bestätigungskennung ergänzt ist, an die Zertifizierungsstelle, und
   in der Zertifizierungsstelle
e) Prüfen der Bestätigungskennung, und
f) Bearbeiten der erweiterten Zertifikatanforderung und Ausgeben (S7) einer Zertifikatantwort durch die Zertifizierungsstelle lediglich dann, wenn die Prüfung erfolgreich durchgeführt wurde.

Durch das Ergänzen der Zertifikatanforderung mit der empfangenen Bestätigungskennung und das Weiterleiten der erweiterten Zertifikatanforderung kann die Zertifizierungsstelle überprüfen, ob die Anforderungsnachricht protokolliert wurde und lediglich dann die erweiterte Zertifikatanforderung bearbeiten und ein Zertifikat ausgeben, wenn dies der Fall ist, d.h. wenn die Prüfung erfolgreich. Somit wird sichergestellt, dass zu jedem von einer Registrierungsstelle angefragten Zertifikat eine Protokollierungsnachricht in der Protokollierungsvorrichtung gespeichert ist, und dass ein Zertifikat nur dann ausgegeben wird, wenn die anfragende Registrierungsstelle ein Protokollieren der Anfragenachricht anhand der Bestätigungskennung nachweisen kann. Die Protokollierungsvorrichtung ist räumlich von der sendenden Registrierungsstelle getrennt ausgebildet. Somit können bei einer Manipulation der Registrierungsstelle die von dieser Registrierungsstelle angefragten Zertifikate ermittelt und beispielsweise für ungültig erklärt werden.

In einer vorteilhaften Ausführungsform umfasst die Protokollierungsnachricht eine Nutzerkennung, die den Nutzer des Zertifikats kennzeichnet, und eine Registrierungsstellenkennung, die die sendende Registrierungsstelle kennzeichnet.

Über die Registrierungsstellenkennung kann einerseits die anfragende Registrierungsstelle identifiziert und der Nutzer des Zertifikats ermittelt werden. Wird eine Registrierungsstelle manipuliert können somit alle von der Registrierungsstelle gesendet Protokollierungsnachrichten, ermittelt werden und somit die Zertifikatanforderungen und Zertifikate, die von der manipulierten Registrierungsstelle angefragt wurden, identifiziert werden. Anhand der Nutzerkennung kann der Nutzer kurzfristig über ein potentiell manipuliertes Zertifikat informiert werden. Ein von der Registrierungsstelle angefordertes Zertifikat kann somit ermittelt und bspw. gesperrt werden. Die Protokollierungsnachricht kann zusätzlich beispielsweise der gesamte Inhalt oder eine Untermenge des Inhalts der Zertifikatanfrage umfassen.

In einer vorteilhaften Ausführungsform umfasst die Bestätigungskennung eine Eingangszeit der Protokollierungsnachricht in der Protokollierungsvorrichtung.

Somit können Zertifikatanforderungen zeitlich eingeordnet werden und beispielsweise Zertifikatanforderungen, die vor einem Zeitpunkt der Manipulation der Registrierungsstelle von Zertifikatanforderungen, die nach diesem Zeitpunkt erstellt wurden und somit potenziell manipuliert sind, unterschieden werden.

In einer vorteilhaften Ausführungsform wird die Bestätigungskennung mit einem kryptographischen Schlüssel der Protokollierungsvorrichtung signiert.

Somit kann eine Veränderung der Bestätigungskennung nach der Ausstellung erkannt werden und die die Bestätigungskennung ausstellende Protokollierungsvorrichtung von der Zertifizierungsstelle identifiziert werden.

In einer vorteilhaften Ausführungsform wird die Zertifikatanforderung über eine Kette von mehr als einer Registrierungsstelle an die Zertifizierungsstelle übermittelt, und in jeder der Registrierungsstellen werden die Verfahrensschritte a) bis d) ausgeführt.

Somit ist eine Zertifikatanforderung auf jede einzelne Registrierungsstelle einer Kette von aufeinanderfolgenden Registrierungsstellen, die die Zertifikatanforderung bearbeitet und weiterleitet zurückverfolgbar. Es ist somit ein Rückschluss lediglich auf die erste Registrierungsstelle oder die letzte Registrierungsstelle in einer Kette von Registrierungsstellen beschränkt.

In einer vorteilhaften Ausführungsform werden in einer zweiten und jeder nachfolgenden Registrierungsstelle der Kette von Registrierungsstellen die Verfahrensschritte e) und f) vor der Ausführung der Verfahrensschritte a) bis d) ausgeführt
Somit kann eine fehlende Protokollierung in der vorausgehende Registrierungsstelle und somit frühzeitig erkannt werden. Ein Angriff auf die die Zertifikatanforderung empfangenden Registrierungsstelle durch die vorausgehende Registrierungsstelle kann somit verhindert werden.

In einer vorteilhaften Ausführungsform wird die in einer nachfolgenden Registrierungsstelle empfangene erweiterte Zertifikatsanforderung um die von der Protokollierungsvorrichtung in der nachfolgenden Registrierungsstelle empfangene Bestätigungskennung ergänzt.

Die erweiterte Zertifikatanforderung umfasst somit ein Bestätigungskennung für jede Registrierungsstelle der Kette von Registrierungsstellen. Die Zertifizierungsstelle kann somit jede der Registrierungsstellen identifizieren. Ist eine dieser Registrierungsstellen als manipuliert bekannt, kann die Überprüfung als nicht erfolgreich beendet werden.

In einer vorteilhaften Ausführungsform wird in der Protokollierungsvorrichtung die Information zur Zertifikatsanforderung in einer Blockchain gespeichert.

In einer vorteilhaften Ausführungsform wird in der Protokollierungsvorrichtung die Information zur Zertifikatsanforderung in einem mit einem digitalen Schlüssel der Protokollierungsvorrichtung signierten Merkle-Tree abgespeichert.

Somit ist Protokollierungsnachricht bzw. die Information zur Zertifikatanforderung revisionssicher gespeichert. Eine Veränderung der gespeicherten Information ist identifizierbar.

Gemäß einem zweiten Aspekt betrifft die Erfindung ein System zur nachvollziehbaren Anforderung von Zertifikaten für einen Nutzer umfassend mindestens eine Registrierungsstelle, eine Protokollierungsvorrichtung, und einer Zertifizierungsstelle, die derart ausgebildet sind folgende Schritte auszuführen:
a) Empfangen einer Zertifikatanforderung zur Ausstellung eines Zertifikats für einen Nutzer in der Registrierungsstelle,
b) Senden einer Protokollierungsnachricht, die Information zur Zertifikatsanforderung enthält, von der Registrierungsstelle an eine Protokollierungsvorrichtung,
c) Empfangen einer Bestätigungskennung, wenn die Information in der Protokollierungsvorrichtung erfolgreiche gespeichert wurde,
   in der Registrierungsstelle,
d) Weiterleiten einer erweiterten Zertifikatanforderungsnachricht, die um die Bestätigungskennung ergänzt ist, an die Zertifizierungsstelle, und
   in der Zertifizierungsstelle,
e) Prüfen der Bestätigungskennung, und
f) Bearbeiten der erweiterten Zertifikatsanforderung und Ausgeben einer Zertifikatantwort durch die Zertifizierungsstelle lediglich dann, wenn die Prüfung erfolgreich durchgeführt wurde.

Im System erhält die CA bzw. jede nachfolgende Registrierungsstelle einer Kette von Registrierungsstellen eine Bestätigung, dass eine Protokollierungsnachricht für die Zertifikatanfrage an die Protokollierungsvorrichtung übermittelt wurde. Damit kann im Fall eines Sicherheitsvorfalls nachvollzogen werden, wer und wann die Zertifikatanforderung gestellt hat.

Gemäß einem dritten Aspekt betrifft die Erfindung eine Registrierungsvorrichtung, umfassend mindestens einen Prozessor, der derart ausgebildet ist, folgende Schritte auszuführen:
a) Empfangen einer Zertifikatanforderung zur Ausstellung eines Zertifikats für einen Nutzer in der Registrierungsstelle,
b) Senden einer Protokollierungsnachricht, die Information zur Zertifikatsanforderung enthält, von der Registrierungsstelle an eine Protokollierungsvorrichtung,
c) Empfangen einer Bestätigungskennung, wenn die Information in der Protokollierungsvorrichtung erfolgreiche gespeichert wurde,
d) Weiterleiten einer erweiterten Zertfikatanforderungsnachricht, die um die Bestätigungskennung ergänzt wurde, an die Zertifizierungsstelle.

Die Registrierungsstelle protokolliert nicht nur eine empfangene Zertifikatanfrage, sondern bestätigt das Protokollieren durch die von der Protokollierungsvorrichtung erhaltene Bestätigungskennung. Damit können von der Registrierungsstelle angeforderte Zertifikate einfachere identifiziert werden.

In einer vorteilhaften Ausführungsform ist die Registrierungsvorrichtung derart ausgebildet, eine erweiterte Zertifikatanforderung zu empfangen und die nachfolgenden Schritte durchzuführen:
- Prüfen der empfangenen Bestätigungskennung, und
- Bearbeiten der erweiterten Zertifikatsanforderungsnachricht gemäß den Schritten b) bis d) lediglich dann, wenn die Prüfung erfolgreich durchgeführt wurde.

Gemäß einem vierten Aspekt betrifft die Erfindung eine Protokollierungsvorrichtung, umfassend mindestens einen Prozessor, der derart ausgebildet ist, die folgenden Schritte durchzuführen:
- Empfangen einer Protokollierungsnachricht, die Information zur Zertifikatanforderung enthält, von einer Registrierungsstelle,
- Übermitteln einer Bestätigungskennung, wenn die Information in der Protokollierungsvorrichtung erfolgreiche gespeichert wurde an die Registrierungsstelle.

Gemäß einem fünften Aspekt betrifft die Erfindung eine Zertifizierungsstelle, umfassend mindestens einen Prozessor, der derart ausgebildet ist, die folgenden Schritte durchzuführen:
- Empfangen einer erweiterten Zertifikatanfrage, die eine Bestätigungskennung umfasst, von einer Registrierungsstelle,
- Prüfen der Bestätigungskennung, und
- Bearbeiten der erweiterten Zertifikatsanforderung und Ausgeben eines Zertifikates lediglich dann, wenn die Prüfung erfolgreich durchgeführt wurde.

Durch das Prüfen der Bestätigungskennung kann die Zertifizierungsstelle ein fehlendes Protokollieren der Zertifikatanforderung durch eine der Registrierungsstellen identifizieren und damit ein Sicherheitsrisiko durch die Registrierungsstelle frühzeitig erkennen und abwehren.

Ein sechster Aspekt der Erfindung betrifft ein Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens durchzuführen.

Sofern es in der nachfolgenden Beschreibung nicht anders angegeben ist, beziehen sich die Begriffe "empfangen", "senden", "weiterleiten", "prüfen", "bearbeiten" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliege können, beispielsweise als elektrische Impulse. Das System und darin optional enthaltene Komponenten, wie beispielsweise eine Registrierungsstelle, eine Zertifizierungsstelle, eine Protokollierungsvorrichtung, eine Nutzer und dergleichen kann bzw. können einen oder mehrere Prozessoren, umfassen. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln.

Ein Computerprogrammprodukt, wie z. B. ein Computerprogrammmittel, kann beispielsweise als Speichermedium, wie zum Beispiel einer Speicherkarte, USB-Stick, CD-ROM, DVD oder auch in Form einer herunterladbaren Datei von einem Server in einem Netzwerk bereitgestellt oder geliefert werden.

Das erfindungsgemäße System sowie die erfindungsgemäße Registrierungsstelle, Protokollierungsvorrichtung und Zertifizierungsstelle sind derart konfiguriert das erfindungsgemäße Verfahren wie beschrieben auszuführen.

Ausführungsbeispiele des erfindungsgemäßen Verfahrens und der erfindungsgemäßen Anordnung sind in den Zeichnungen beispielhaft dargestellt und werden anhand der nachfolgenden Beschreibung näher erläutert. Es zeigen:
- Fig. 1: ein Ausführungsbeispiel des erfindungsgemäßen Verfahrens als Ablaufdiagramm;
- Fig. 2: ein erstes Ausführungsbeispiel des erfindungsgemäßen Systems in schematischer Darstellung;
- Fig. 3: ein Ausführungsbeispiel einer erfindungsgemäßen Protokollierungsvorrichtung in schematischer Darstellung;
- Fig. 4: ein Ausführungsbeispiel einer erfindungsgemäßen Registrierungsstelle in schematischer Darstellung;
- Fig. 5: ein Ausführungsbeispiel einer erfindungsgemäßen Zertifizierungsstelle in schematischer Darstellung; und
- Fig. 6: ein zweites Ausführungsbeispiel des erfindungsgemäßen Verfahrens mit einer Kette von Registrierungsstellen als Nachrichtenablaufdiagramm.

Einander entsprechende Teile sind in allen Figuren mit den gleichen Bezugszeichen versehen.

Digitale Zertifikate werden zunehmend für Geräte ausgestellt, die in einem industriellen Umfeld, beispielsweise in einer Automatisierungsanlage oder in einem Verteilungsnetz, aber auch in einem privaten Umfeld, beispielsweise für Geräte in einem Haushaltsnetz oder mit Zugang zum Internet eingesetzt werden. Das digitale Zertifikat dient beispielsweise als Plagiatsschutz, mit dem ein Hersteller des Geräts überprüft und identifiziert werden kann oder zur Authentisierung des Geräts bei einer Datenkommunikation. Digitale Zertifikate werden auch für Dienste oder Applikationen auf Geräten ausgestellt.

Das digitale Zertifikat, im Weiteren kurz Zertifikat genannt, wird dabei über eine Public-Key-Infrastruktur mittels einer oder mehreren Registrierungsstellen und einer Zertifizierungsstelle ausgestellt. Dabei ist es wichtig, dass eine Anforderung zur Ausstellung eines Zertifikats von vertrauenswürdigen Komponenten, d.h. dem Gerät und der Registrierungsstelle, an die Zertifizierungsstelle gesendet wird. Gelangt ein Angreifer beispielsweise in den Besitz eines Berechtigungsnachweis, mit dem sich die Registrierungsstelle bei der Zertifizierungsstelle ausweist, können Zertifikate vom Angreifer über die Registrierungsstelle bei der Zertifizierungsstelle angefordert werden und beispielsweise auf gefälschten Geräten installiert und in Umlauf gebracht werden.

Um solche durch die manipulierte Registrierungsstelle erschlichenen Zertifikate schnell und in Ihrer Gesamtheit identifizieren und anschließend beispielsweise sperren zu können, ist eine zuverlässige Rückverfolgung jeder Zertifikatanforderung an die sendende Registrierungsstelle erforderlich.

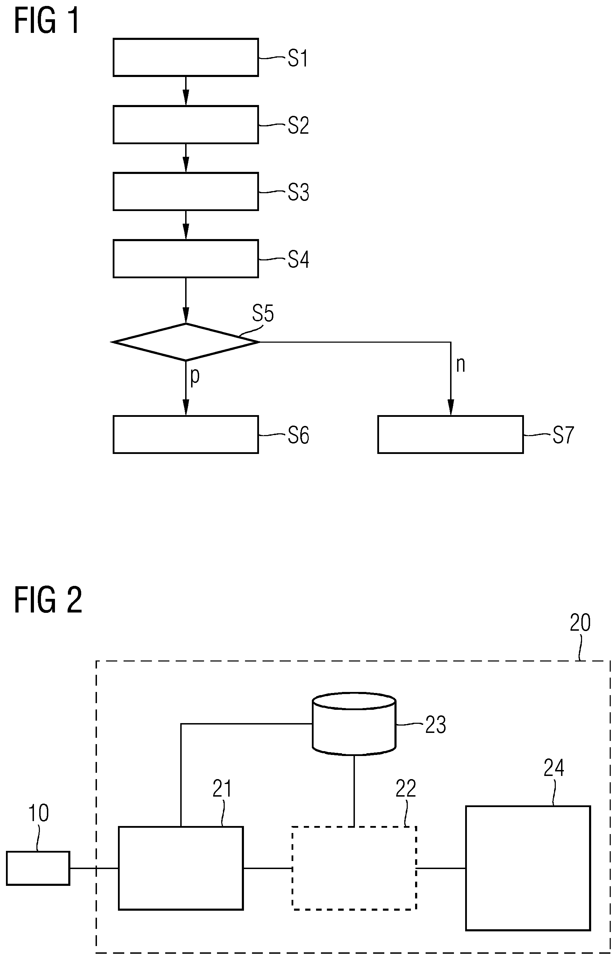

Anhand von Fig.1 wird ein solches Verfahren erläutert.

In einem ersten Verfahrensschritt S1 wird eine Zertifikatanforderung zur Ausstellung eines Zertifikats für einen Nutzer in der Registrierungsstelle empfangen. Ein Nutzer ist beispielsweise ein Gerät und ein Dienst, auf dem das Zertifikat implementiert wird. Die Registrierungsstelle sendet Information zur empfangenen Zertifikatsanforderung in eine Protokollierungsnachricht an eine Protokollierungsvorrichtung, siehe Verfahrensschritt S2. Die Protokollierungsvorrichtung speichert diese Information revisionssicher ab, sodass eine spätere Änderung der Information nicht möglich ist oder eine Änderung der gespeicherten Information identifizierbar ist. Die Protokollierungsvorrichtung protokolliert alle Zertifikatsanforderungen, die durch die angeschlossenen Registrierungsstellen erzeugt und an die Zertifizierungsstelle geschickt wurden und legt diese Information in einem revisionssicheren Logbuch ab.

Die Protokollierungsvorrichtung sendet eine Bestätigungskennung, wenn die Information erfolgreich gespeichert wurde an die Registrierungsstelle zurück. Die Bestätigungskennung enthält die eine Eingangszeit der Protokollierungsnachricht in der Protokollierungsvorrichtung und wird bevorzugterweise mit einem kryptographischen Schlüssel der Protokollierungsvorrichtung digital signiert.

Die Registrierungsstelle empfängt die Bestätigungskennung, siehe Verfahrensschritt S3, und leitet eine um die Bestätigungskennung erweiterte Zertifikatanforderung an die Zertifizierungsstelle weiter, siehe Verfahrensschritt S4. In der Zertifizierungsstelle wird die Bestätigungskennung geprüft, siehe Schritt S5. Die Zertifikatsanforderung wird nur dann bearbeitet, siehe Verfahrensschritt S6, wenn die Prüfung der Bestätigungskennung, siehe Verfahrensschritt S5, erfolgreich durchgeführt wurde. Dies ist dann der Fall, wenn überhaupt eine Bestätigungskennung in der Zertifikatanfrage enthalten ist. Insbesondere ist die Prüfung erst dann erfolgreich, wenn die Signatur der Bestätigungskennung erfolgreich geprüft wurde und/oder die enthaltene Eingangszeit als erlaubt bestätigt wird.

Die digitale Signatur wird beispielsweise nur dann positiv bestätigt, wenn der kryptographische Schlüssel einer vertrauenswürdigen, erlaubten Protokollierungsvorrichtung zugeordnet werden kann. Bevorzugt ist die erlaubte Protokollierungsvorrichtung eine zentrale, räumlich von der Registrierungsstelle abgesetzt ausgebildet. Wird die Bestätigungskennung in Schritt S5 nicht erfolgreich geprüft, siehe Pfeil mit Markierung n, wird die Zertifikatanforderung nicht weiter geprüft und beispielsweise eine entsprechende Antwort an die Registrierungsstelle oder das Gerät gesendet, siehe Verfahrensschritt S7.

Durch das Verfahren werden somit die Zertifikatanforderung von der nächsten Zertifizierungs- oder auch Registrierungsstelle nur angenommen und weiterverarbeitet, wenn die sendende Registrierungsstelle nachweisen kann das die Zertifikatanforderung in einem bevorzugterweise zentralen Protokollierungsvorrichtung protokoliert wurde.

Fig. 2 zeigt eine System 20 zur nachvollziehbaren Anforderung von Zertifikaten durch einen Nutzer 10. Das System umfasst eine Registrierungsstelle 21, sowie eine optionale weitere Registrierungsstelle 22, eine Protokollierungsvorrichtung 23 und eine Zertifizierungsstelle 24. Der Nutzer 10 ist mit dem System 20 und insbesondere mit der Registrierungsstelle 21 verbunden. Die Registrierungsstelle 21 ist entweder direkt oder über die weitere Registrierungsstelle 22 mit der Zertifizierungsstelle 24 verbunden. Mehrere in Reihe miteinander verbundene Registrierungsstellen, hier die Registrierungsstelle 21 und die weitere Registrierungsstelle 22, bilden Kette von Registrierungsstellen. Jede der Registrierungsstellen 21, 22 ist mit der Protokollierungsvorrichtung 23 verbunden. Die Komponenten des Systems 20 sowie der Nutzer 10 mit dem System 20 sind jeweils über ein Datenkommunikationsverbindungen miteinander verbunden.

Die Protokollierungsvorrichtung 23 ist bevorzugt räumlich getrennt von den Registrierungsstellen 21, 22 angeordnet. Die Protokollierungsvorrichtung 23 protokolliert alle Zertifikatanforderungen die durch die verbundenen Registrierungsstellen 21, 22 erzeugt und an die Zertifizierungsstelle 24 gesendet werden und speichert die Information zu den Zertifikatanforderungen in einer revisionssicheren Speichereinheit ab.

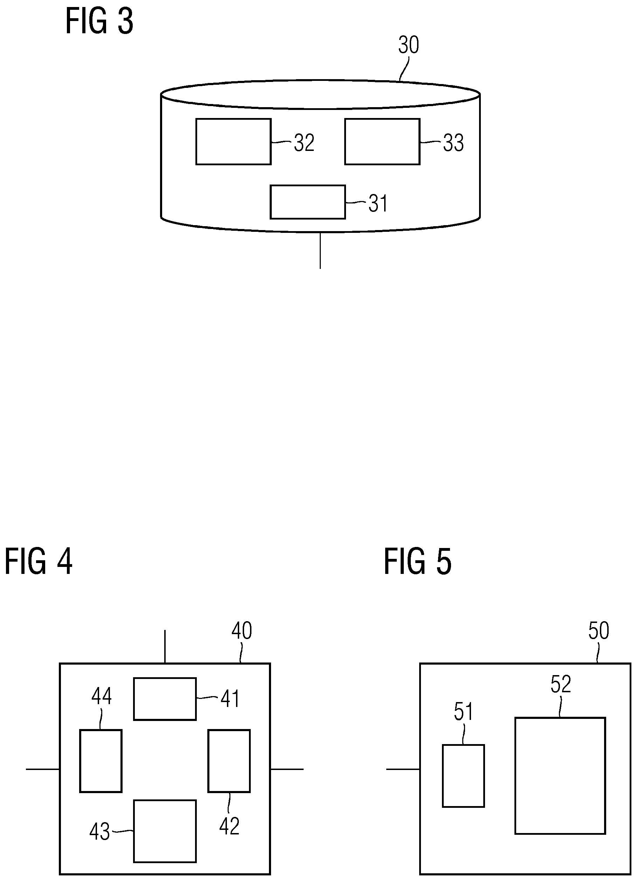

Fig. 3 zeigt ein Ausführungsbeispiel 30 der Protokollierungsvorrichtung 23 im Detail. Die Protokollierungsvorrichtung 30 umfasst ein Dateninterface 31, eine Steuereinheit 32 und eine Speichereinheit 33. Das Dateninterface 31 ist derart ausgebildet, eine Protokollierungsnachricht, die Information zu einer Zertifikatsanforderung enthält, von der Registrierungsstelle 21, 22 zu empfangen. Die Speichereinheit 33 ist derart konfiguriert, die Protokollierungsnachricht abzuspeichern. In einer Ausführungsvariante ist die Speichereinheit 33 derart konfiguriert die Information in einer Blockchain abzuspeichern. In einer anderen Ausführungsvariante ist die Speichereinheit 33 derart konfiguriert die Information zur Zertifikatsanforderung in einem mit einem digitalen Schlüssel signierten Hash-Baum, auch Merkle-Tree genannt, abgespeichert. Die Blockchain umfasst eine kontinuierlich erweiterbare Liste von Datensätzen in einzelnen Blöcken. Neue Blöcke werden nach einem Konsensverfahren erstellt und mittels kryptographischer Verfahren an eine bestehende Kette angehängt. Jeder Block enthält dabei typischerweise einen kryptographisch sicheren Hash des vorhergehenden Blocks, einen Zeitstempel und Transaktionsdaten. Der Hash-Baum ist ein Baum aus Hashwerten von Datenblöcken, beispielsweise von einer Datei. Die Blockchain und der Hash-Baum dienen dazu, die Integrität der Information zur Zertifikatanforderung sicherzustellen.

Die Steuerungseinheit 32 ist derart konfiguriert, eine Bestätigungskennung zu generieren, die den Eingang und das Speichern der Protokollnachricht bestätigt. In einer bevorzugten Variante umfasst die Bestätigungskennung eine Eingangszeit der Protokollierungsnachricht in der Protokollierungsvorrichtung. Die Steuerungseinheit erstellt eine Signatur der Bestätigungskennung abhängig von einem kryptographischen Schlüssel der Protokollierungsvorrichtung 30. Die Protokollierungsvorrichtung 30 sendet die signierte Bestätigungskennung als Bestätigung für das Speichern der Protokollnachricht über das Dateninterface 31 an die Registrierungsvorrichtung 21 zurück.

Fig. 4 zeigt ein Ausführungsbeispiel 40 der Registrierungsstelle 21 im Detail. Die Registrierungsstelle 40 umfasst eine Nutzerschnittstelle 41, die derart ausgebildet ist eine Zertifikatanforderung zur Ausstellung eines Zertifikats vom Nutzer 10 zu empfangen. Die Registrierungsvorrichtung 40 umfasst des Weiteren eine Loggingschnittstelle 42, die derart ausgebildet ist eine Protokollierungsnachricht, die Information zur Zertifikatsanforderung enthält, an eine Protokollierungsvorrichtung 23, 30 zu senden und eine Bestätigungskennung von der Protokollierungsvorrichtung 23, 30 zu empfangen. Die Registrierungsvorrichtung 40 umfasst des Weiteren eine Ausgabeschnittstelle 43, die derart ausgebildet ist eine erweiterten Zertifikatanforderungsnachricht, die um die Bestätigungskennung ergänzt wurde, an die Zertifizierungsstelle 24 weiterzuleiten. Die Registrierungsvorrichtung 40 umfasst des Weiteren eine Protokolliereinheit 44, die derart ausgebildet ist eine Protokollierungsnachricht zu generieren, die Information zur Zertifikatanforderung zu erstellen, die optional zusätzlich eine Nutzerkennung, die den Nutzer des Zertifikats kennzeichnet, und eine Registrierungsstellenkennung, die die sendende Registrierungsstelle 40 kennzeichnet, umfasst. Die von der Protokollierungsvorrichtung 23 empfangene Bestätigungskennung wird der empfangenen Zertifikatanforderung hinzugefügt und als erweiterte Zertifikatanforderung über eine Ausgabeschnittstelle 43 an die Zertifizierungsstelle 24 bevorzugt kryptographisch mit einem Schlüssel der Registrierungsstelle 40 signiert ausgegeben.

Fig. 5 zeigt ein Ausführungsbeispiel 50 der Zertifizierungsstelle 24 im Detail. Die Zertifizierungsstelle 50 umfasst eine Zertifizierungsschnittstelle 51 sowie eine Ausstellungseinheit 52. Die Zertifizierungsschnittstelle 51 ist derart ausgebildet eine erweiterten Zertifikatanfrage, die eine Bestätigungskennung umfasst, von einer Registrierungsstelle 21, 40 zu empfangen. Die Ausstellungseinheit 52 ist derart ausgebildet, die
Bestätigungskennung zu prüfen, und die erweiterten Zertifikatanforderung lediglich dann zu bearbeiten, wenn die Prüfung erfolgreich durchgeführt wurde. Ist diese Bearbeitung erfolgreich, gibt die Zertifizierungsstelle 50 ein Zertifikat aus.

Empfängt die Registrierungsstelle 40 die Zertifikatanforderung von einer vorangehenden Registrierungsstelle, ist die Protokolliereinheit 44 derart ausgebildet, die in der erweiterte Zertifikatanforderung enthaltene Bestätigungskennung zu prüfen, und die erweiterte Zertifikatsanforderung nur dann zu bearbeiten und weiterzuleiten, wenn die Bestätigungskennung erfolgreich geprüft wurde. Die Registrierungsstelle 40 protokolliert die empfangene Zertifikatanforderung und empfängt wiederum eine Bestätigungskennung von der Protokollierungsvorrichtung 23. Die Registrierungsstelle 40 ergänzt die von der vorangehenden Registrierungsstelle empfangene erweiterte Zertifikatanforderung um die weitere Bestätigungskennung, die das Protokollieren bestätigt von der Protokollierungsvorrichtung eines Zertifikatantwort durch die Zertifizierungsstelle lediglich dann, wenn die Prüfung erfolgreich durchgeführt wurde.

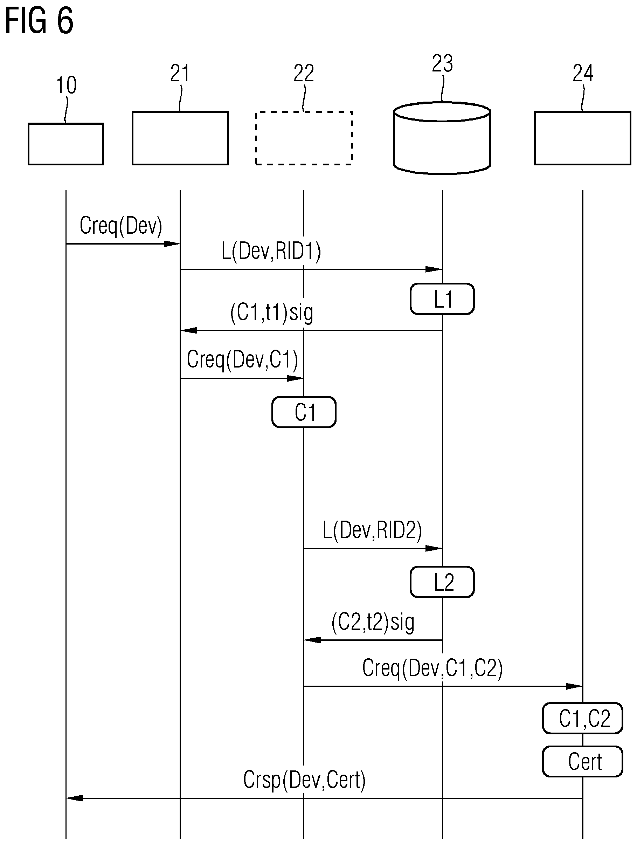

Fig. 6 zeigt ein Ausführungsbeispiel des Verfahrens in dem ein Zertifikat vom Nutzer 10 in dem in Fig. 2 dargestellten System 20 mit zwei aufeinanderfolgenden Registrierungsstellen 21, 22 bei der Zertifizierungsstelle 24 angefordert wird.

Die Registrierungsstelle 21 empfängt einen Zertifikatanforderung Creq von dem Nutzer 10. Die Registrierungsstelle 21 sendet eine Protokollierungsnachricht L an die Protokollierungsvorrichtung 23. Die Protokollierungsnachricht enthält Information zur Zertifikatanforderung. Die Information zur Zertifikatanforderung umfasst mindestens eine Nutzerkennung Dev des Nutzers und eine Registrierungsstellenkennung RID1, mit der die Registrierungsstelle 21 eindeutig identifiziert werden kann. Die Information zur Zertifikatanforderung kann weitere Teile oder die gesamte Zertifikatanforderung umfassen. Die Protokollierungsvorrichtung 24 speichert die Information zur Zertifikatanforderung ab, siehe L1, und sendet eine Bestätigungskennung C1, die optional eine Eingangszeit t1, beispielsweise einen Zeitstempel, der Protokollierungsnachricht umfasst und von der Protokollierungsvorrichtung 24 signiert ist an die Registrierungsstelle 21 zurück. Die Registrierungsstelle 21 leitet eine um die signierte Bestätigungskennung C1 und optional den Zeitstempel erweiterte Zertifikatanforderung Creq an die weitere Registrierungsstelle 22 weiter.

Die weitere Registrierungsstelle 22 prüft zuerst die Bestätigungskennung C1 aus der erweiterten Zertifikatanforderung Creq. Lediglich wenn diese Prüfung erfolgreich durchgeführt wurde, sendet die weitere Registrierungsstelle 22 eine Protokollierungsnachricht L mit der Nutzerkennung Dev und der Kennung RID2 der weiteren Registrierungsstelle 22 an die Protokollierungsvorrichtung 23. Diese speichert die enthaltene Information ab, siehe L2, und sendet eine Bestätigungskennung C2 und einen Zeitstempel t2 an die weitere Registrierungsstelle 23 zurück. Diese ergänzt die erweiterte Zertifikatanforderung Creq um die signierte Bestätigungskennung C2 und leitet die Anforderung an die Zertifizierungsstelle 24 weiter.

Die Zertifizierungsstelle 24 überprüft jede der Bestätigungskennungen sowie deren Signaturen. War die Prüfung erfolgreich stellt die Zertifizierungsstelle das angeforderte Zertifikat Cert aus und sendet dies an den Nutzer 10 zurück.

Die Zertifizierungsstelle bzw. die weitere Registrierungsstelle erhält somit eine Bestätigung, dass die Zertifikatanforderung in der Registrierungsstelle protokolliert wurde. Damit kann im Fall eines Angriffs auf die Registrierungsstelle 21 nachvollzogen werden kann, wer und wann die Zertifikatanforderung gestellt hat. Durch deren revisionssicheres Speichern in der Protokollierungsvorrichtung ist sichergestellt, dass ein Angreifer die gespeicherte Information nicht verändern oder löschen kann.

Alle Verfahrensschritte können durch die entsprechenden Geräte implementiert werden, die zum Ausführen des jeweiligen Verfahrensschrittes geeignet sind. Alle Funktionen, die von gegenständlichen Merkmalen ausgeführt werden können, können ein Verfahrensschritt des Verfahrens sein. Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum nachvollziehbaren Anfordern eines Zertifikats durch mindestens eine Registrierungsstelle (21) bei einer Zertifizierungsstelle (24), umfassend die Schritte:
a) Empfangen (S1) einer Zertifikatanforderung zur Ausstellung eines Zertifikats für einen Nutzer (10) in der Registrierungsstelle (21),
b) Senden (S2) einer Protokollierungsnachricht, die Information zur Zertifikatsanforderung enthält, von der Registrierungsstelle (21) an eine Protokollierungsvorrichtung (23),
in der Registrierungsstelle (21),
c) Empfangen (S3) einer Bestätigungskennung, wenn die Information in der Protokollierungsvorrichtung (23) erfolgreiche gespeichert wurde,
d) Weiterleiten (S4) einer erweiterten Zertifikatanforderung, die um die Bestätigungskennung ergänzt ist, an die Zertifizierungsstelle (24), und
in der Zertifizierungsstelle (24)
e) Prüfen (S5) der Bestätigungskennung, und
f) Bearbeiten (S6) der erweiterten Zertifikatsanforderung und Ausgeben einer Zertifikatantwort durch die Zertifizierungsstelle (24) lediglich dann, wenn die Prüfung erfolgreich durchgeführt wurde.

2. Verfahren nach Anspruch 1, wobei die Protokollierungsnachricht eine Nutzerkennung (Dev), die den Nutzer (10) des Zertifikats kennzeichnet, und eine Registrierungsstellenkennung (RID1, RID2), die die sendende Registrierungsstelle (21, 22) kennzeichnet, umfasst.

3. Verfahren nach einem der vorangehenden Ansprüche, wobei die Bestätigungskennung (C1, C2) eine Eingangszeit (t1, t2) der Protokollierungsnachricht in der Protokollierungsvorrichtung (23) umfasst.

4. Verfahren nach einem der vorangehenden Ansprüche, wobei die Bestätigungskennung (C1, C2) mit einem kryptographischen Schlüssel der Protokollierungsvorrichtung (23) signiert wird.

5. Verfahren nach einem der vorangehenden Ansprüche, wobei die Zertifikatanforderung über eine Kette von mehr als einer Registrierungsstelle (21, 22) an die Zertifizierungsstelle (24) übermittelt wird, und in jeder der Registrierungsstellen (21, 22) die Verfahrensschritte a) bis d) ausgeführt werden.

6. Verfahren nach Anspruch 5, wobei in einer zweiten und jeder weiteren nachfolgenden Registrierungsstellen (22) der Kette von Registrierungsstellen (21, 22) die Verfahrensschritte e) und f) vor der Ausführung der Verfahrensschritte a) bis d) ausgeführt werden.

7. Verfahren nach Anspruch 5 oder 6, wobei die in einer nachfolgenden Registrierungsstelle (22) empfangene erweiterte Zertifikatsanforderung um die von der Protokollierungsvorrichtung (23) in der nachfolgenden Registrierungsstelle (22) empfangene Bestätigungskennung (C1, C2) ergänzt wird.

8. Verfahren nach einem der vorangehenden Ansprüche, wobei in der Protokollierungsvorrichtung (23) die Information zur Zertifikatsanforderung in einer Blockchain gespeichert wird.

9. Verfahren nach einem der Ansprüche 1-7, wobei in der Protokollierungsvorrichtung (23) die Information zur Zertifikatsanforderung in einem mit einem digitalen Schlüssel der Protokollierungsvorrichtung (23) signierten Hash-Baum abgespeichert wird.

10. System (20) zur nachvollziehbaren Anforderung von Zertifikaten für einen Nutzer (10) umfassend mindestens eine Registrierungsstelle (21, 22), eine Protokollierungsvorrichtung (23), und einer Zertifizierungsstelle (24), die derart ausgebildet sind folgende Schritte auszuführen:
a) Empfangen einer Zertifikatanforderung zur Ausstellung eines Zertifikats für einen Nutzer (10) in der Registrierungsstelle (21),
b) Senden einer Protokollierungsnachricht, die Information zur Zertifikatsanforderung enthält, von der Registrierungsstelle (21) an eine Protokollierungsvorrichtung (23), in der Registrierungsstelle (21),
c) Empfangen einer Bestätigungskennung, wenn die Information in der Protokollierungsvorrichtung (23) erfolgreich gespeichert wurde,
d) Weiterleiten einer erweiterten Zertifikatanforderungsnachricht, die um die Bestätigungskennung ergänzt ist, an die Zertifizierungsstelle (24), und
in der Zertifizierungsstelle (24)e) Prüfen der Bestätigungskennung, und
f) Bearbeiten der erweiterten Zertifikatsanforderung und Ausgeben einer Zertifikatantwort durch die Zertifizierungsstelle (24) lediglich dann, wenn die Prüfung erfolgreich durchgeführt wurde.

11. Registrierungsvorrichtung (21, 22, 40), umfassend mindestens einen Prozessor, der derart ausgebildet ist folgende Schritte auszuführen:
a) Empfangen einer Zertifikatanforderung gemäß Anspruch 1 zur Ausstellung eines Zertifikats für einen Nutzer (10) in der Registrierungsstelle (21, 22, 40),
b) Senden einer Protokollierungsnachricht, die Information zur Zertifikatsanforderung enthält, von der Registrierungsstelle (21, 22, 40) an eine Protokollierungsvorrichtung (23),
c) Empfangen einer Bestätigungskennung, wenn die Information in der Protokollierungsvorrichtung (23) erfolgreiche gespeichert wurde,
d) Weiterleiten einer erweiterten Zertifikatanforderungsnachricht, die um die Bestätigungskennung ergänzt wurde, an die Zertifizierungsstelle (24).

12. Registrierungsvorrichtung (21, 22, 40) nach Anspruch 11, die derart ausgebildet ist, eine erweiterte Zertifikatanforderung zu empfangen und die nachfolgenden Schritte durchzuführen:
- Prüfen der empfangenen Bestätigungskennung (C1), und
- Bearbeiten der erweiterten Zertifikatsanforderungsnachricht gemäß den Schritten b) bis d) lediglich dann, wenn die Prüfung erfolgreich durchgeführt wurde.

13. Protokollierungsvorrichtung (23, 30), umfassend mindestens einen Prozessor, der derart ausgebildet ist, die folgenden Schritte durchzuführen:
- Empfangen einer Protokollierungsnachricht gemäß Anspruch 1, die Information zur Zertifikatsanforderung enthält, von einer Registrierungsstelle (21, 22, 40),
- Übermitteln einer Bestätigungskennung, wenn die Information in der Protokollierungsvorrichtung (23, 30) erfolgreiche gespeichert wurde an die Registrierungsstelle (21, 22, 40).

14. Zertifizierungsstelle (24, 50), umfassend mindestens einen Prozessor, der derart ausgebildet ist, die folgenden Schritte durchzuführen:
- Empfangen einer erweiterten Zertifikatanforderung gemäß Anspruch 1, die eine Bestätigungskennung umfasst, von einer Registrierungsstelle (21, 22, 40),
- Prüfen der Bestätigungskennung (C1, C2), und
- Bearbeiten der erweiterten Zertifikatanforderung und Ausgeben eines Zertifikates (Cert) lediglich dann, wenn die Prüfung erfolgreich durchgeführt wurde.

15. Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens gemäß einem der Ansprüche 1 bis 9 durchzuführen.

## Claims

1. Method for requesting a certificate in a documented manner using at least one registration point (21) at a certification point (24), comprising the following steps:
a) receiving (S1) a certificate request to issue a certificate for a user (10) in the registration point (21),
b) sending (S2) a logging message, which contains information on the certificate request, from the registration point (21) to a logging device (23),
in the registration point (21),
c) receiving (S3) a confirmation identifier when the information has been successfully stored in the logging device (23),
d) forwarding (S4) an expanded certificate request, which is supplemented with the confirmation identifier, to the certification point (24), and
in the certification point (24)
e) checking (S5) the confirmation identifier, and
f) processing (S6) the expanded certificate request and outputting a certificate response using the certification point (24) only if the check was carried out successfully.

2. Method according to Claim 1, wherein the logging message comprises a user identifier (Dev) which identifies the user (10) of the certificate and a registration point identifier (RID1, RID2) which identifies the sending registration point (21, 22).

3. Method according to either of the preceding claims, wherein the confirmation identifier (C1, C2) comprises an entry time (t1, t2) of the logging message in the logging device (23).

4. Method according to any one of the preceding claims, wherein the confirmation identifier (C1, C2) is signed using a cryptographic key of the logging device (23).

5. Method according to any one of the preceding claims, wherein the certificate request is transmitted via a chain of more than one registration point (21, 22) to the certification point (24), and method steps a) to d) are executed in each of the registration points (21, 22).

6. Method according to Claim 5, wherein in a second and each further following registration point (22) of the chain of registration points (21, 22), method steps e) and f) are executed before the execution of method steps a) to d).

7. Method according to Claim 5 or 6, wherein the expanded certificate request received in a following registration point (22) is supplemented with the confirmation identifier (C1, C2) received from the logging device (23) in the following registration point (22).

8. Method according to any one of the preceding claims, wherein the information on the certificate request is stored in a block chain in the logging device (23).

9. Method according to any one of Claims 1-7, wherein the information on the certificate request is stored in the logging device (23) in a hash tree signed using a digital key of the logging device (23).

10. System (20) for requesting certificates for a user (10) in a documented manner comprising at least one registration point (21, 22), a logging device (23), and a certification point (24), which are designed to execute the following steps:
a) receiving a certificate request to issue a certificate for a user (10) in the registration point (21),
b) sending a logging message, which contains information on the certificate request, from the registration point (21) to a logging device (23), in the registration point (21),
c) receiving a confirmation identifier when the information has been successfully stored in the logging device (23),
d) forwarding an expanded certificate request message, which is supplemented with the confirmation identifier, to the certification point (24), and
in the certification point (24)e)
checking the confirmation identifier, and
f) processing the expanded certificate request and outputting a certificate response using the certification point (24) only if the check was carried out successfully.

11. Registration device (21, 22, 40), comprising at least one processor, which is designed to execute the following steps:
a) receiving a certificate request according to Claim 1 to issue a certificate for a user (10) in the registration point (21, 22, 40),
b) sending a logging message, which contains information on the certificate request, from the registration point (21, 22, 40) to a logging device (23),
c) receiving a confirmation identifier when the information has been successfully stored in the logging device (23),
d) forwarding an expanded certificate request message, which was supplemented with the confirmation identifier, to the certification point (24).

12. Registration device (21, 22, 40) according to Claim 11, which is designed to receive an expanded certificate request and carry out the following steps:
- checking the received confirmation identifier (C1), and
- processing the expanded certificate request message according to steps b) to d) only if the check was carried out successfully.

13. Logging device (23, 30), comprising at least one processor which is designed to carry out the following steps:
- receiving a logging message according to Claim 1, which contains information on the certificate request from a registration point (21, 22, 40),
- transmitting a confirmation identifier, when the information has been successfully stored in the logging device (23, 30), to the registration point (21, 22, 40).

14. Certification point (24, 50), comprising at least one processor, which is designed to carry out the following steps:
- receiving an expanded certificate request according to Claim 1, which comprises a confirmation identifier, from a registration point (21, 22, 40),
- checking the confirmation identifier (C1, C2), and
- processing the expanded certificate request and outputting a certificate (Cert) only if the check was carried out successfully.

15. Computer program product, comprising a nonvolatile computer-readable medium which is loadable directly into a memory of a digital computer, comprising program code parts which, upon execution of the program code parts by the digital computer, prompt it to carry out the steps of the method according to any one of Claims 1 to 9.

## Revendications

1. Procédé pour la demande traçable d'un certificat par le biais d'au moins une autorité d'enregistrement (21) auprès d'une autorité de certification (24), comportant les étapes suivantes :
a) réception (S1) d'une demande de certificat pour la délivrance d'un certificat pour un utilisateur (10) dans l'autorité d'enregistrement (21),
b) envoi (S2) d'un message de journalisation, lequel contient des informations pour la demande de certificat, par l'autorité d'enregistrement (21) à un dispositif de journalisation (23), dans l'autorité d'enregistrement (21),
c) réception (S3) d'un identifiant de confirmation lorsque les informations ont été stockées avec succès dans le dispositif de journalisation (23),
d) transfert (S4) d'une demande de certificat étendu, laquelle est complétée par l'identifiant de confirmation, à l'autorité de certification (24), et
dans l'autorité de certification (24)
e) vérification (S5) de l'identifiant de confirmation, et
f) traitement (S6) de la demande de certificat étendu et émission en sortie d'une réponse de certificat par le biais de l'autorité de certification (24) seulement si la vérification a été mise en œuvre avec succès.

2. Procédé selon la revendication 1, dans lequel le message de journalisation comporte un identifiant d'utilisateur (Dev), lequel identifie l'utilisateur (10) du certificat, et un identifiant d'autorités d'enregistrement (RID1, RID2), lequel identifie l'autorité d'enregistrement (21, 22) expéditrice.

3. Procédé selon l'une des revendications précédentes, dans lequel l'identifiant de confirmation (C1, C2) comporte une heure d'entrée (t1, t2) du message de journalisation dans le dispositif de journalisation (23).

4. Procédé selon l'une des revendications précédentes, dans lequel l'identifiant de confirmation (C1, C2) est signé avec une clé cryptographique du dispositif de journalisation (23).

5. Procédé selon l'une des revendications précédentes, dans lequel la demande de certificat est transmise par l'intermédiaire d'une chaîne de plus d'une autorité d'enregistrement (21, 22) à l'autorité de certification (24), et les étapes de procédé a) à d) sont exécutées dans chacune des autorités d'enregistrement (21, 22).

6. Procédé selon la revendication 5, dans lequel dans une deuxième autorité d'enregistrement (22) et chaque autorité d'enregistrement (22) suivante supplémentaire de la chaîne d'autorités d'enregistrement (21, 22), les étapes de procédé e) et f) sont exécutées avant l'exécution des étapes de procédé a) à d).

7. Procédé selon la revendication 5 ou 6, dans lequel la demande de certificat étendu reçue dans une autorité d'enregistrement (22) suivante est complétée par l'identifiant de confirmation (C1, C2) reçu en provenance du dispositif de journalisation (23) dans l'autorité d'enregistrement (22) suivante.

8. Procédé selon l'une des revendications précédentes, dans lequel les informations pour la demande de certificat sont stockées dans une chaîne de blocs dans le dispositif de journalisation (23).

9. Procédé selon l'une des revendications 1 à 7, dans lequel les informations pour la demande de certificat sont mémorisées dans un arbre de hachage signé avec une clé numérique du dispositif de journalisation (23) dans le dispositif de journalisation (23).

10. Système (20) pour la demande traçable de certificats pour un utilisateur (10) comportant au moins une autorité d'enregistrement (21, 22), un dispositif de journalisation (23), et une autorité de certification (24), lesquels sont conçus pour exécuter les étapes suivantes :
a) réception d'une demande de certificat pour la délivrance d'un certificat pour un utilisateur (10) dans l'autorité d'enregistrement (21),
b) envoi d'un message de journalisation, lequel contient des informations pour la demande de certificat, par l'autorité d'enregistrement (21) à un dispositif de journalisation (23), dans l'autorité d'enregistrement (21),
c) réception d'un identifiant de confirmation lorsque les informations ont été stockées avec succès dans le dispositif de journalisation (23),
d) transfert d'un message de demande de certificat étendu, lequel est complété par l'identifiant de confirmation, à l'autorité de certification (24), et
dans l'autorité de certification (24)
e) vérification de l'identifiant de confirmation, et
f) traitement de la demande de certificat étendu et émission en sortie d'une réponse de certificat par le biais de l'autorité de certification (24) seulement si la vérification a été mise en œuvre avec succès.

11. Dispositif d'enregistrement (21, 22, 40), comportant au moins un processeur, lequel est conçu pour exécuter les étapes suivantes :
a) réception d'une demande de certificat selon la revendication 1 pour la délivrance d'un certificat pour un utilisateur (10) dans l'autorité d'enregistrement (21, 22, 40),
b) envoi d'un message de journalisation, lequel contient des informations pour la demande de certificat, par l'autorité d'enregistrement (21, 22, 40) à un dispositif de journalisation (23),
c) réception d'un identifiant de confirmation lorsque les informations ont été stockées avec succès dans le dispositif de journalisation (23),
d) transfert d'un message de demande de certificat étendu, lequel a été complété par l'identifiant de confirmation, à l'autorité de certification (24).

12. Dispositif d'enregistrement (21, 22, 40) selon la revendication 11, lequel est conçu pour recevoir une demande de certificat étendu et pour exécuter les étapes suivantes :
- vérification de l'identifiant de confirmation (C1) reçu, et
- traitement du message de demande de certificat étendu selon les étapes b) à d) seulement si la vérification a été mise en œuvre avec succès.

13. Dispositif de journalisation (23, 30), comportant au moins un processeur, lequel est conçu pour exécuter les étapes suivantes :
- réception d'un message de journalisation selon la revendication 1, lequel contient des informations pour la demande de certificat, en provenance d'une autorité d'enregistrement (21, 22, 40),
- transmission d'un identifiant de confirmation à l'autorité d'enregistrement (21, 22, 40) lorsque les informations ont été stockées avec succès dans le dispositif de journalisation (23, 30).

14. Autorité de certification (24, 50), comportant au moins un processeur, lequel est conçu pour exécuter les étapes suivantes :
- réception d'une demande de certificat étendu selon la revendication 1, laquelle comporte un identifiant de confirmation, en provenance d'une autorité d'enregistrement (21, 22, 40),
- vérification de l'identifiant de confirmation (C1, C2), et
- traitement de la demande de certificat étendu et émission en sortie d'un certificat (Cert) seulement si la vérification a été mise en œuvre avec succès.

15. Produit de programme informatique, comportant un support non volatil lisible par ordinateur, lequel peut être chargé directement dans une mémoire d'un ordinateur numérique, comportant des parties de code de programme qui, lors de l'exécution des parties de code de programme par l'ordinateur numérique, amènent celui-ci à mettre en œuvre les étapes du procédé selon l'une des revendications 1 à 9.
